# EUROPÄISCHE PATENTSCHRIFT

(11) **EP 3 756 435 B1**
(45) Veröffentlichungstag und Bekanntmachung des Hinweises auf die Patenterteilung: **07.06.2023**
(21) Anmeldenummer: 20401033.4
(22) Anmeldetag: 19.05.2020
(51) Int. Cl.: A01B 59/00, A01B 63/111, F15B 11/00, F15B 13/02

(54) **VORRICHTUNG ZUR EINSTELLUNG EINES HYDRAULISCHEN OBERLENKERS**
DEVICE FOR ADJUSTING A HYDRAULIC TOP LINK
DISPOSITIF DE RÉGLAGE D'UN BRAS SUPÉRIEUR D'ATTELAGE HYDRAULIQUE

(30) Priorität: 25.06.2019 DE 102019117081
(43) Veröffentlichungstag der Anmeldung: 30.12.2020
(73) Patentinhaber: Amazonen-Werke H. Dreyer SE & Co. KG, 49205 Hasbergen (DE)
(72) Erfinder: Hoffmann, Karl-Peter, 27798 Hude (DE)

(56) Entgegenhaltungen:
- EP-A1- 1 092 095
- DE-A1- 19 747 949
- DE-A1-102013 101 761
- DE-A1-102015 103 925
- NL-A- 7 003 615

## Beschreibung

Die Erfindung betrifft eine Vorrichtung zur Einstellung eines hydraulischen Oberlenkers gemäß dem Oberbegriff des Patentanspruches 1.

Derartige Vorrichtungen sind in DE 10 2013 101761 A1 und EP 1 092 095 A1 offenbart.

Eine weitere derartige Vorrichtung zur Einstellung eines hydraulischen Oberlenkers ist in DE 197 47 949 A1 beschrieben. Dieser als doppeltwirkender Hydraulikzylinder ausgebildete hydraulische Oberlenker weist auf jeder Kammerseite einen Hydraulikanschluss auf, der jeweils über einen Leitungsabschnitt an einen gemeinsamen, für jeden Hydraulikanschluss ein mittels über eine Drucksteuerung entsperrbares Rückschlagventil aufweisenden Sperrblock angeschlossen ist. Die Anschlüsse der Leitungsabschnitte des Hydraulikzylinders sind mit jeweils einem der beiden mit den entsperrbaren Rückschlagventilen verbundenen Eingangsanschlüsse des Sperrblockes verbunden. An anderer Stelle des Sperrblockes sind mit den entsperrbaren Rückschlagventil verbundene Ausgangsanschlüsse angeordnet, an welche jeweils mit einer ein Steuergerät aufweisenden Hydraulikanlage des die landwirtschaftlichen Maschine tragenden und/oder ziehenden Zugfahrzeuges verbundenen Hydraulikleitungen angeschlossen sind.

Durch Betätigung des Steuergerätes der Hydraulikanlage des die landwirtschaftliche Maschine tragenden und/oder ziehenden Zugfahrzeuges lässt sich durch entsprechende Umschaltung des Steuergerätes der hydraulische Oberlenker durch Aus- oder Einfahren der Kolbenstange des Oberlenkers gegenüber dem Zylinderrohr des Oberlenkers in seiner Länge einstellen. Die Fixierung der Länge bzw. der Einstellung des hydraulischen Oberlenkers erfolgt durch Umschalten des Steuergerätes in die Sperrstellung, so dass über die Rückschlagventile des Sperrblockes zusätzlich abgesichert die Länge des hydraulischen Oberlenker sicher eingestellt ist.

In einigen Einsatzfällen ist es gewünscht, dass der hydraulische Oberlenker in eine so genannte Schwimmstellung eingestellt wird, damit für die entsprechenden Arbeitseinsätze der Oberlenker entsprechend der aktiven Einsatzsituation der hydraulische Oberlenker sich selbstständig durch die Geräte, die der Oberlenker miteinander verbindet oder koppelt, in seiner Länge verändern kann. Für derartige Einsatzfälle ist der bekannte Oberlenker jedoch nicht geeignet, weil eine derartige Schwimmstellung hier nicht realisierbar ist.

Ein hydraulischer Oberlenker mit einem Lagesensor ist zudem in DE 10 2015 103 925 A1 offenbart. Die NL 7 003 615 A offenbart eine hydraulische Wendevorrichtung für Drehpflüge und aus DE 197 47 949 A1 ist eine Vorrichtung zur Längeneinstellung eines Oberlenkers bekannt.

Der Erfindung liegt die Aufgabe zu Grunde, eine einfache komfortable und sichere Umschaltung des hydraulischen Oberlenkers auf Schwimmstellung in möglichst einfacher und kostengünstiger Weise zu schaffen.

Diese Aufgabe wird erfindungsgemäß durch die Merkmale des Anspruchs 1 gelöst. Vorteilhafte Ausgestaltungen der Erfindung sind in den Unteransprüchen angegeben.

Infolge dieser Maßnahmen ist es in einfacher und sicherer Weise möglich, die gewünschte Schwimmstellung herzustellen, wenn sie benötigt wird. Durch die in einfacher Weise herzustellende Schwimmstellung für den hydraulischen Oberlenker, können die durch diesen Oberlenker miteinander bzw. gekoppelten Geräte sich frei zueinander bewegen, um beispielsweise einer unebenen oder hügeligen Bodenoberfläche folgen zu können. Falls erforderlich kann sehr einfach die Sperrstellung des hydraulischen Oberlenker wieder aktiviert werden, so dass die Schwimmstellung aufgehoben ist.

Um den hydraulischen Oberlenker in einfacher Weise in Schwimmstellung oder Sperrstellung bringen zu können, ist vorgesehen, dass die beiden 2/2-Wegeventile jeweils eine Sperrstellung und eine eine Schwimmstellung des Oberlenkers schaffende Durchflussstellung aufweisen, dass die 2/2-Wegeventile mittels einer gemeinsamen Steuerleitung verbunden und über diese Steuerleitung in die Sperrstellung oder die Durchflussstellung schaltbar sind. Über die Steuerleitung sind die elektrisch betätigbare Schaltelemente aufweisenden 2/2-Wegeventile in die für die jeweilige Stellung erforderliche Position zu schalten. So lässt sich beispielsweise die Sperrfunktion des Steuerblocks durch die elektrisch betätigbaren Schaltelemente des Regelventils über die Bypassleitung einfach überbrücken. Zusätzlich muss noch das Steuergerät der Hydraulikanlage des die landwirtschaftlichen Maschine tragenden und/oder ziehenden Zugfahrzeuges in Schwimmstellung gebracht werden, um die Schwimmstellung des hydraulischen Oberlenker herzustellen. Werden über die Steuerleitung die elektrisch betätigbaren Schaltelemente des Regelventils deaktiviert, so wird sofort die Sperrfunktion der Steuerblock wieder aktiv und der hydraulische Oberlenker ist in seiner eingestellten Stellung gesperrt und kann sich in seiner Länge nicht mehr verändern.

Um sicherzustellen, dass immer eine sichere Verbindung zwischen dem Sperrblock mit den entsperrbaren Rückschlagventil und den Anschlüssen des hydraulischen Oberlenker gegeben ist, ist vorgesehen, dass die beiden ersten Hydraulikleitungen zwischen dem Sperrblock und dem als doppeltwirkenden Hydraulikzylinder ausgebildeten Oberlenker als aus Metall bestehende Leitungsrohre ausgebildet sind.

Bei einer Ausführungsform, wenn die Hydraulikanlage die zumindest ein Steuergerät aufweisende Hydraulikanlage des die landwirtschaftlichen Maschine tragenden und/oder ziehenden Zugfahrzeuges ist, ist vorgesehen, dass über das Steuergerät die Länge des Oberlenkers einstellbar und/oder Schwimmstellung herstellbar ist. Hierdurch lässt sich sehr einfach die jeweils gewünschte Einstellung des hydraulischen Oberlenkers in Verbindung Mitte der vor erwähnten elektronischen Steuerleitung und der hierüber betätigbaren Wegeventile realisieren.

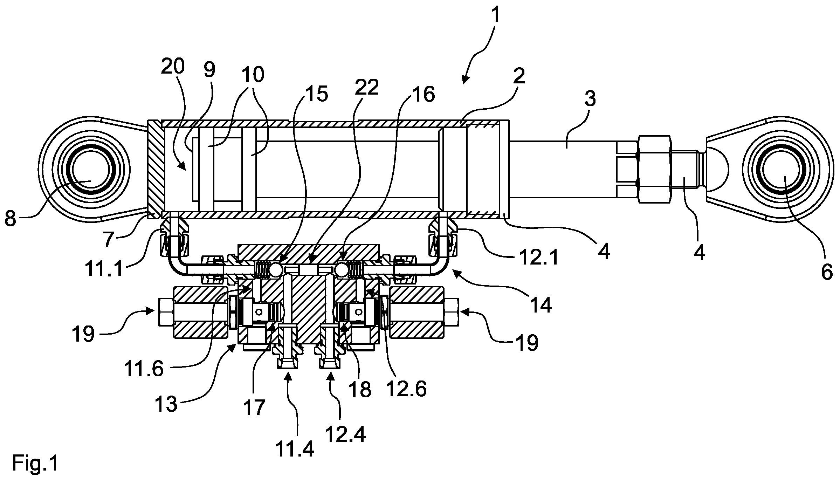

Weitere Einzelheiten der Erfindung sind der Beispielsbeschreibung und den Zeichnungen zu entnehmen. Die Zeichnungen zeigen
- Fig.1: den hydraulischen Oberlenker in Draufsicht,

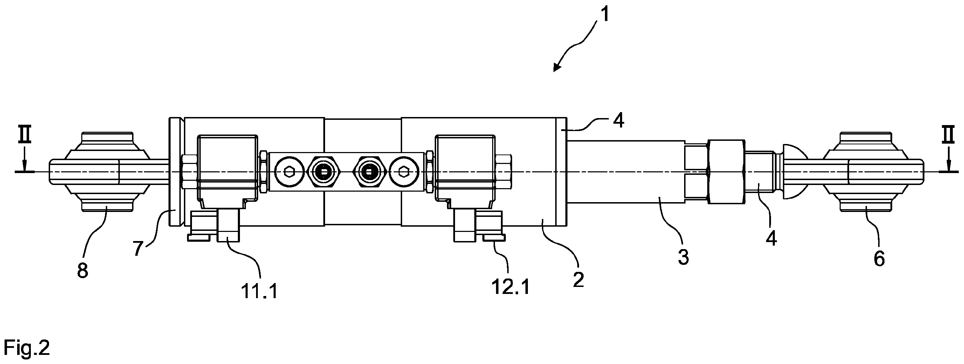

- Fig.2: den hydraulischen Oberlenker im Schnitt II - II und
- Fig.3: den Schaltplan für den hydraulisch betätigbaren Hydraulikzylinder mit dem Steuergerät der Hydraulikanlage des die landwirtschaftlichen Maschine tragenden und/oder ziehenden Zugfahrzeuges in vereinfachter Darstellung.

Der hydraulische Oberlenker 1 weist die in einem Zylinderrohr 2 angeordnete Kolbenstange 3 auf. Die Kolbenstange 3 ragt aus dem einen Ende 4 des Zylinderohres 2 heraus. An dem aus dem Zylinderrohr 2 herausragenden Ende 5 der Kolbenstange 3 ist ein erstes Anschlussauge 6 angeordnet. An dem Zylinderrohr 2 ist an dem ersten Anschlussauge 6 gegenüberliegenden Seite 7 des Zylinderrohres 2 ein zweites Anschlussauge 8 angeordnet. An dem in das Zylinderrohr 2 hineinragenden Ende 9 der Kolbenstange 3 ist ein Dichtelemente gegenüber den Innenflächen des Zylinderrohres 2 aufweisender Kolben 10 angeordnet. In den jeweiligen Endbereichen des Zylinderrohres 2 sind mit dem Innenraum des Zylinderrohres 2 verbundene Anschlüsse 11.1 und 12.1 angeordnet. Diese Anschlüsse 11.1 und 12.1 sind über zwei erste Hydraulikleitungen 11.2 und 12.2 mit den beiden Eingangsanschlüssen 11.3 und 12.3 eines Sperrblocks 13 verbunden. Diese zwischen dem als doppeltwirkenden Hydraulikzylinder ausgebildeten Oberlenker 1 angeordneten Hydraulikleitungen 11.2 und 12.2 sind als aus Metall bestehende Leitungsrohre ausgebildet. Weiterhin weist der Sperrblock 13 zwei Ausgangsanschlüsse 11.4 und 12.4 auf, die über Hydraulikleitungen 11.5 und 12.5 mit der ein Steuergerät 14 aufweisenden Hydraulikanlage eines eine landwirtschaftlichen Maschine tragenden und/oder ziehenden Zugfahrzeuges verbunden sind.

In den jeweils die gegenüberliegenden Eingangs- 11.3 und 12.3 und Ausgangsanschlüsse 11.4 und 12.4 des Sperrblockes 13 verbindende Verbindungsleitung 11.6 und 12.6 ist jeweils ein entsperrbares Rückschlagventil 15 bzw. 16 angeordnet. Somit weist der Sperrblock 13 zwei entsperrbare Rückschlagventile 15 und 16 auf.

In dem Sperrblock 13 mit den beiden entsperrbaren Rückschlagventilen 15 bzw. 16 sind weiterhin in integrierter Weise zwei 2/2-Wegeventile 17 und 18 angeordnet. Jedem dieser entsperrbaren Rückschlagventile 15 bzw. 16 ist eine das jeweilige Rückschlagventil 15 bzw. 16 umgehende Bypassleitung 11.7 bzw. 12.7 zugeordnet. Die jeweilige Bypassleitung 11.7 bzw. 12.7 ist mit der jeweiligen gegenüberliegenden Eingangs- 11.3 bzw. 12.3 und Ausgangsanschlüsse 11.4 bzw. 12.4 des Sperrblockes 13 verbindenden Verbindungsleitung 11.6 bzw. 12.6 zur Umgehung des zugeordneten entsperrbaren Rückschlagventils 15 bzw. 16 entsprechend verbunden. In jeder dieser Verbindungsleitung 11.6 bzw. 12.6 ist in einer die gegenüberliegenden Eingangs- 11.3 bzw. 12.3 und Ausgangsanschlüsse 11.4 bzw. 12.4 des Sperrblockes 13 verbindenden Verbindungsleitung 11.6 bzw. 12.6 mittels eines motorischen Betätigungselementes 17.1 bzw. 18.1 betätigbares2/2-Wegeventil 17 bzw. 18 angeordnet.

Das jeweilige motorische Betätigungselement 17.1 bzw. 18.1 des jeweiligen 2/2-Wegeventils 17 bzw. 18 ist mit einer gemeinsamen Steuerleitung 19 verbunden. Dieser Steuerleitung 19 ist ein manuell betätigbarer Schalter 20 zugeordnet. Der Steuerleitung 19 ist eine Stromquelle 21 zugeordnet.

Jedes der 2/2-Wegeventile 17 bzw. 18 weist zwei mögliche Schaltstellungen 17.2 17.3 bzw. 18.2 und 18.3 auf, wobei die eine Schaltstellung als Durchflussstellung 17.3 bzw. 18.3 ausgebildet ist, während die andere Schaltstellung als Sperrstellung 17.2 bzw. 18.2 ausgestaltet ist. Somit weisen die beiden 2/2-Wegeventile 17 bzw. 18 jeweils eine Sperrstellung 17.2 bzw. 18.2 und eine eine Schwimmstellung des Oberlenkers 1 schaffende Durchflussstellung 17.3 bzw. 18.3 auf. Wie bereits erwähnt sind die beiden 2/2-Wegeventile 17 bzw. 18 mittels einer gemeinsamen und den Schalter 20 aufweisenden Steuerleitung 19 verbunden. Über diese Steuerleitung 19 mit dem Schalter 20 sind die2/2-Wegeventile 17 bzw. 18 in die Sperrstellung 17.2 bzw. 18.2 oder die Durchflussstellung 17.3 bzw. 18.3, um den hydraulischen Oberlenker 1 wahlweise in die eingestellte Stellung zu fixieren bzw. eine freie Veränderung zu ermöglichen, schaltbar.

Somit sind wie vor bereits erwähnt, die beiden 2/2-Wegeventile 17 bzw. 18 jeweils gleichzeitig in eine Sperrstellung oder eine eine Schwimmstellung des Oberlenkers 1 schaffende Durchflussstellung zu schalten. Dies geschieht dadurch, dass die 2/2-Wegeventile 17 bzw. 18 mittels einer gemeinsamen Steuerleitung verbunden und über diese Steuerleitung 19 gleichzeitig in die Sperrstellung oder die Durchflussstellung geschaltet werden. Hierdurch sind die Länge des hydraulischen Oberlenkers 1 mittels der vorerwähnten Wegeventile in Zusammenspiel mit dem Steuergerät 14 der Hydraulikanlage in Verbindung mit den entsperrbaren Rückschlagventilen 15 und 16 und den über die Steuerleitung 19 und den zugeordneten motorischen Einstellmitteln 17.1 und 18.1 über die Steuerleitung 19 ansteuerbaren 2/2-Wegeventilen 17 und 18 einstellbar oder die Schwimmstellung für den hydraulischen Oberlenker 1 herstellbar.

Das Steuergerät 14 der Hydraulikanlage des die landwirtschaftlichen Maschine tragenden und/oder ziehenden Zugfahrzeuges weist zumindest ein Schaltventil 14A auf, welches zumindest eine Schaltstellung für eine Sperrstellung 14A.1, eine Schwimmstellung 14A.2 und zwei aktive Stellungen 14A.3 und 14A.4 für das Ein- und Ausfahren der Kolbenstange 3 des hydraulischen Oberlenkers 1 auf.

Die Funktionsweise der vorstehend beschriebenen Vorrichtung zur Einstellung eines hydraulischen Oberlenkers 1 einer Anbaueinrichtung einer landwirtschaftlichen Maschine mit einem am Oberlenker 1 angeordnetem Sperrblock 13, der über zwei erste Hydraulikleitungen 11.2 und 12.2 mit dem als doppeltwirkende Hydraulikzylinder ausgebildeten Oberlenker 1 und über zwei weitere Hydraulikleitungen 11.5 und 12.5 mit einer Hydraulikanlage verbunden ist und mit über umschaltbare Wegeventile 17 bzw. 18 aufweisende über Bypassleitungen 11.7 und 12.7 umgehbare Rückschlagventile 15 bzw. 16 ausgestattet ist, ist folgende:

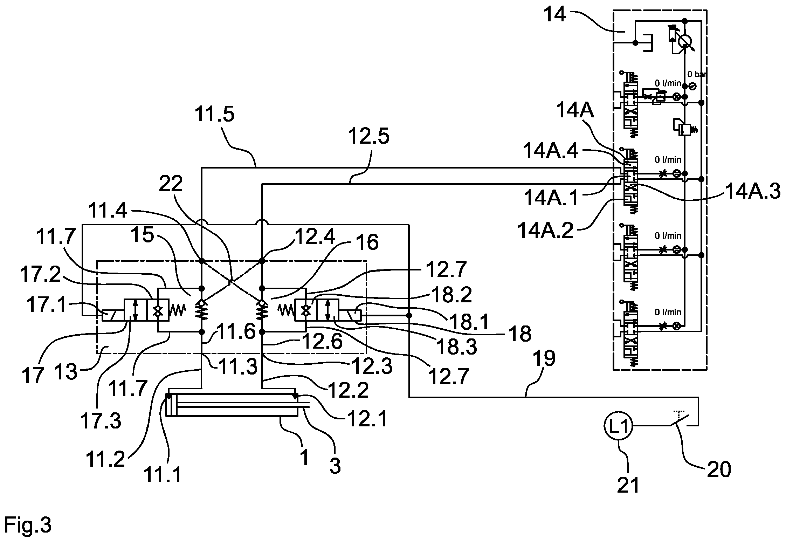

In der Grundstellung, wie dies in dem Schaltplan gemäß Figur 3 dargestellt ist, befindet sich das Schaltventil 14A des Steuergerätes 14, so dass die Sperrstellung 14 A.1 aktiv ist. Gleichzeitig sperren die entsperrbaren Rückschlagventil 15 und 16 die Verbindungsleitung 11.6 und 12.6 ab, auch die Bypassleitungen 11.7 bzw. 12.7 werden durch die Schaltstellungen 17.2 bzw. 18.2 der Wegeventile 17 bzw. 18 abgesperrt. Somit ist die Kolbenstange 3 des Oberlenker 1 in der eingestellten Stellung sicher fixiert und festgesetzt. In dieser Einstellung wird die Position und somit die Länge des Oberlenker in dieser Position gehalten. Durch die feste Verrohung durch die Leitungen 11.2 und 12.2 ist das Körperschadensrisiko für Menschen auf das geringstmögliche Risiko minimiert.

Wenn der hydraulische Oberlenker 1 durch Ausfahren der Kolbenstange 3 verlängert werden soll, wird durch Betätigung des Umschaltventils 14A dieses in die aktive Schaltstellung 14A.4 gebracht. Hierdurch wird das über eine Drucksteuerung das entsperrbares Rückschlagventil 16 entsperrt, Hydrauliköl über die Leitung 11.5 aus der Hydraulikanlage über das Rückschlagventil 15, der Verbindungsleitung 11.6 und 11.2 in den Zylinderraum des hydraulischen Oberlenkers 1 gedrückt. Hierdurch wird die Kolbenstange 3 ausgefahren und der Oberlenker 1 wird verlängert. Gleichzeitig wird aus dem Zylinderraum, indem sich die Kolbenstange 3 befindet, Hydrauliköl über die Leitung 12.2 und 12.6 und das entsperrbare Rückschlagventil 16 in die Hydraulikleitung 12.5 und somit in die Hydraulikanlage zurückgedrückt. Wenn die entsprechende Länge des Oberlenkers 1 eingestellt ist, wird das Schaltventil 14 A wieder in die Sperrstellung 14 A.1 gebracht.

Wenn der hydraulische Oberlenker 1 durch Einfahren der Kolbenstange 3 verkürzt werden soll, wird durch Betätigung des Umschaltventils 14A dieses in die aktive Schaltstellung 14A.3 gebracht. Hierdurch wird das über eine Drucksteuerung das entsperrbares Rückschlagventil 15 entsperrt, Hydrauliköl über die Leitung 12.5 aus der Hydraulikanlage über das Rückschlagventil 15, der Verbindungsleitung 12.6 und 12.2 in den Zylinderraum des hydraulischen Oberlenkers 1 gedrückt. Hierdurch wird die Kolbenstange 3 eingefahren und der Oberlenker1 wird verkürzt. Gleichzeitig wird aus dem Zylinderraum, indem sich die Kolben befindet, Hydrauliköl über die Leitung 11.2 und 11.6 und das entsperrbare Rückschlagventil 15 in die Hydraulikleitung 11.5 und somit in die Hydraulikanlage zurückgedrückt. Wenn die entsprechende Länge des Oberlenkers 1 eingestellt ist, wird das Schaltventil 14 A wieder in die Sperrstellung 14 A.1 gebracht.

Um nun die erfindungsgemäße Schwimmstellung des hydraulischen Oberlenkers in einfacher Weise unsicher einzustellen, wenn Sie benötigt wird, wird zunächst durch den Fahrer des die landwirtschaftlichen Maschine tragenden und/oder ziehenden Zugfahrzeuges der Schalter 20 betätigt, so dass dieser geschlossen ist. Die als Magnete ausgebildeten motorischen Betätigungselemente 17.1 und 18.1 werden mit Strom beaufschlagt, da sie mit der Stromquelle 21 nunmehr verbunden sind. Hierdurch werden die 2/2-Wegeventile 17 und 18 gleichzeitig umgeschaltet, so dass die die Durchflussstellung bildende Schaltstellung 17.3 bzw. 18.3 die jeweilige Bypassleitung 11.7 und 12.7 schließt, so dass hierüber die Rückschlagventile 15 und 16 umgangen werden. Anschließend wird das Schaltventil 14A des Schleppersteuergerätes 14 durch den Fahrer des die landwirtschaftlichen Maschine tragenden und/oder ziehenden Zugfahrzeuges in die Schwimmstellung 14A.2 gebracht. Hiernach befindet sich der hydraulische Oberlenker 1 in Schwimmstellung. Der Oberlenker 1 kann seine Länge je nach Erfordernis des Arbeitseinsatzes frei einnehmen.

Um die Schwimmstellung des hydraulischen Oberlenker 1 aufzuheben bzw. auszuschalten braucht von dem Fahrer des die landwirtschaftlichen Maschine tragenden und/oder ziehenden Zugfahrzeuges der Schalter 20 nur wieder in seine Öffnungsstellung Sitzung gebracht werden, so dass die Stromquelle 21 von der Steuerleitung 19 getrennt wird, damit die motorischen Betätigungselemente 18.1, in bevorzugter Weise als Schaltmagnete ausgebildet, das jeweilige die 2/2-Wegeventile 17 und 18 gleichzeitig umschalten und wieder in Sperrstellung 17.2 bzw. 18.2 bringen, damit der Hydraulikzylinder sofort wieder in seiner Position fixiert und gesperrt ist. Somit ist der Sperrblock sofort nach dem Ausschalten wieder aktiv und die Sicherheitsfunktion ist ohne Einschränkung sofort wiedergegeben.

Die Vorteile dieser erfindungsgemäßen Schaltung sind folgende:
- Für die Einstellung der Schwimmstellung für den hydraulischen Oberlenker 1 muss in zwei Schritten hergestellt werden, indem der manuell zu betätigende Schalter 20 für die Steuerleitung 19 und das Schaltventil 14A des Schleppersteuergerätes 14 jeweils betätigt werden müssen.
- Um die Schwimmstellung aufzuheben zur Wiederherstellung der Normalstellung des hydraulischen Oberlenker 1 (der Oberlenker ist in seiner Länge fixiert und blockiert) ist nur ein Schritt erforderlich, nämlich den Schalter 20 zu dessen Öffnung und Unterbrechung der Stromzufuhr zu den Betätigungselemente 17.1 und 18.1 des Wegeventil 17 bzw. 18. Somit ist der hydraulische Oberlenker 1 sofort blockiert, selbst wenn sich das Abschaltventil 14A des Schlepperteuergerätes 14 noch in Schwimmstellung 14A.2 befindet.

Schließlich soll nicht unerwähnt bleiben, dass eine äußerst kompakte Ausgestaltung des Sperr- und/oder Steuerblockes 13, indem in diesen sowohl die entsperrbaren Rückschlagventile 15 bzw. 16 des eigentlichen Sperrblockes wie auch die als 2/2-Wegeventile 17 bzw. 18 ausgebildeten Überbrückungsventile in integrierter Weise angeordnet sind. Durch diese kompakte Ausgestaltung kann dieser somit direkt auf dem hydraulischen Oberlenker 1 installiert bzw. befestigt werden. Diese Befestigung und Installation kann durch eine feste, aus Metallrohre bestehende Verrohrung geschehen. Soweit kann diese Verrohung auch gleichzeitig die Befestigung Sperr- und/oder Steuerblockes 13 auf dem Oberlenker 1 sein, so dass keine weiteren Befestigungsmittel erforderlich sind.

## Patentansprüche

1. Vorrichtung zur Einstellung eines als doppeltwirkenden Hydraulikzylinder ausgeführten hydraulischen Oberlenkers (1) einer Anbaueinrichtung einer landwirtschaftlichen Maschine,
wobei die Vorrichtung einen am Oberlenker (1) anordbaren Sperrblock (13), zwei erste Hydraulikleitungen (11.2,12.2), zwei weitere Hydraulikleitungen (11.5,12.5) und einen Steuerblock (13) umfasst,
wobei der Sperrblock (13) eingerichtet ist, über die zwei ersten Hydraulikleitungen (11.2,12.2) mit dem Oberlenker (1) und über die zwei weiteren Hydraulikleitungen (11.5,12.5) mit einer Hydraulikanlage verbunden zu werden,
wobei der Sperrblock (13) zwei entsperrbare Rückschlagventile (15,16), die jeweils zwischen einer der ersten Hydraulikleitungen (11.2, 12.2) und einer der weiteren Hydraulikleitungen (11.5, 12.5) angeordnet sind, aufweist, **dadurch gekennzeichnet, dass** der Sperrblock (13) mit den beiden entsperrbaren Rückschlagventilen (15,16) in dem zwei 2/2-Wegeventile (17,18) enthaltenen Steuerblock (13) integriert angeordnet ist, dass jedem entsperrbaren Rückschlagventil (15,16) ein 2/2-Wegeventil (17,18) zugeordnet ist, dass das jeweilige 2/2-Wegeventil (17,18) in einer das zugeordnete entsperrbare Rückschlagventil (15,16) umgehenden Bypassleitung (11.7,12.7) angeordnet ist, wobei die Bypassleitungen (11.7, 12.7) in dem Sperrblock (13) angeordnet sind.

2. Vorrichtung nach Anspruch 1, **dadurch gekennzeichnet, dass** die beiden 2/2-Wegeventile (17,18) jeweils eine Sperrstellung (17.2, 18.2) und eine eine Schwimmstellung (17.3,18.3) des Oberlenkers (1) schaffende Durchflussstellung aufweisen, dass die 2/2-Wegeventile (17,18) mittels einer gemeinsamen Steuerleitung (19) verbunden und über diese Steuerleitung (19) in die Sperrstellung (17.2, 18.2) oder die Durchflussstellung (17.3,18.3) schaltbar sind, wobei die Steuerleitung (19) Teil der Vorrichtung ist.

3. Vorrichtung nach zumindest einem der vorhergehenden Ansprüche, **dadurch gekennzeichnet, dass** die beiden ersten Hydraulikleitungen (11.2,12.2) zwischen dem Sperrblock (13) und dem als doppeltwirkenden Hydraulikzylinder ausgebildeten Oberlenker (1) als aus Metall bestehende Leitungsrohre ausgebildet sind.

4. Vorrichtung nach zumindest einem der vorhergehenden Ansprüche, wobei die Hydraulikanlage die zumindest ein Steuergerät (14) aufweisende Hydraulikanlage des die landwirtschaftlichen Maschine tragenden und/oder ziehenden Zugfahrzeuges ist, wobei die Vorrichtung das Steuergerät (14) umfasst, **dadurch gekennzeichnet, dass** über das Steuergerät (14) die Länge des Oberlenkers (1) einstellbar und/oder Schwimmstellung herstellbar ist.

## Claims

1. An apparatus for adjusting a hydraulic upper link (1), designed as a double-acting hydraulic cylinder, of an attachment device of an agricultural machine,
the apparatus comprising a shut-off block (13) which can be arranged on the upper link (1), two first hydraulic lines (11.2, 12.2), two further hydraulic lines (11.5, 12.5) and a control block (13),
the shut-off block (13) being configured to be connected to the upper link (1) via the two first hydraulic lines (11.2, 12.2) and to a hydraulic system via the two further hydraulic lines (11.5, 12.5),
the shut-off block (13) having two releasable non-return valves (15, 16) which are each arranged between one of the first hydraulic lines (11.2, 12.2) and one of the further hydraulic lines (11.5, 12.5), **characterized in that** the shut-off block (13) comprising the two releasable non-return valves (15, 16) is arranged integrated in the control block (13) containing two 2/2-way valves (17, 18), **in that** a 2/2-way valve (17, 18) is assigned to each releasable non-return valve (15, 16), and **in that** the relevant 2/2-way valve (17, 18) is arranged in a bypass line (11.7, 12.7) that bypasses the associated releasable non-return valve (15, 16), the bypass lines (11.7, 12.7) being arranged in the shut-off block (13).

2. The apparatus according to claim 1, **characterized in that** the two 2/2-way valves (17, 18) each have a shut-off position (17.2, 18.2) and a through-flow position that creates a floating position (17.3, 18.3) of the upper link (1), and **in that** the 2/2-way valves (17, 18) are connected by means of a common control line (19) and can be switched via this control line (19) into the shut-off position (17.2, 18.2) or the through-flow position (17.3, 18.3), the control line (19) being part of the apparatus.

3. The apparatus according to at least one of the preceding claims, **characterized in that** the two first hydraulic lines (11.2, 12.2) are formed, between the locking block (13) and the upper link (1) designed as a double-acting hydraulic cylinder, as line pipes consisting of metal.

4. The apparatus according to at least one of the preceding claims, the hydraulic system being the hydraulic system, comprising at least one control device (14), of the towing vehicle carrying and/or pulling the agricultural machine, the apparatus comprising the control device (14), **characterized in that,** by means of the control device (14), the length of the upper link (1) can be adjusted and/or the floating position can be produced.

## Revendications

1. Dispositif permettant de régler un bras supérieur (1) hydraulique, réalisé sous forme de vérin hydraulique à double action, d'un dispositif de montage d'une machine agricole,
le dispositif comprenant un bloc de verrouillage (13) pouvant être agencé sur le bras supérieur (1), deux premières conduites hydrauliques (11.2, 12.2), deux autres conduites hydrauliques (11.5, 12.5) et un bloc de commande (13),
le bloc de verrouillage (13) étant conçu pour être relié au bras supérieur (1) par l'intermédiaire des deux premières conduites hydrauliques (11.2, 12.2) et à une installation hydraulique par l'intermédiaire des deux autres conduites hydrauliques (11.5, 12.5),
le bloc de verrouillage (13) présentant deux clapets antiretour (15, 16) déverrouillables, qui sont agencés respectivement entre l'une des premières conduites hydrauliques (11.2, 12.2) et l'une des autres conduites hydrauliques (11.5, 12.5), **caractérisé en ce que** le bloc de verrouillage (13) comportant les deux clapets antiretour (15, 16) déverrouillables est agencé, de manière intégrée, dans le bloc de commande (13) contenant deux distributeurs 2/2 (17,18), **en ce qu'**un distributeur 2/2 (17, 18) est associé à chaque clapet antiretour (15, 16) déverrouillable, **en ce que** le distributeur 2/2 (17, 18) respectif est agencé dans une conduite de dérivation (11.7, 12.7) contournant le clapet antiretour (15, 16) déverrouillable associé, les conduites de dérivation (11.7, 12.7) étant agencées dans le bloc de verrouillage (13).

2. Dispositif selon la revendication 1, **caractérisé en ce que** les deux distributeurs 2/2 (17, 18) présentent respectivement une position de verrouillage (17.2, 18.2) et une position de passage générant une position flottante (17.3, 18.3) du bras supérieur (1), **en ce que** les distributeurs 2/2 (17, 18) sont reliés au moyen d'une conduite de commande (19) commune et commutables par l'intermédiaire de ladite conduite de commande (19) dans la position de verrouillage (17.2, 18.2) ou la position de passage (17.3, 18.3), la conduite de commande (19) faisant partie du dispositif.

3. Dispositif selon au moins l'une des revendications précédentes,
**caractérisé en ce que** les deux premières conduites hydrauliques (11.2, 12.2) sont réalisées entre le bloc de verrouillage (13) et le bras supérieur (1) réalisé sous forme de vérin hydraulique à double action en tant que tubes de conduite en métal.

4. Dispositif selon au moins l'une des revendications précédentes, dans lequel l'installation hydraulique est l'installation hydraulique, présentant au moins un appareil de commande (14), du véhicule tracteur portant et/ou tractant la machine agricole, le dispositif comprenant l'appareil de commande (14),
**caractérisé en ce que** la longueur du bras supérieur (1) peut être réglée et/ou la position flottante peut être obtenue par l'intermédiaire de l'appareil de commande (14).
